# EUROPEAN PATENT APPLICATION

(11) **EP 2 285 177 A2**
(43) Date of publication of application: **16.02.2011**
(21) Application number: 10169998.1
(22) Date of filing: 19.07.2010
(51) Int. Cl.: H04W 76/04

(54) **Method for operating packet data protocol context and apparatus therefor**

(30) Priority: 13.08.2009 CN 200910162341
(71) Applicant: SIEMENS AKTIENGESELLSCHAFT, 80333 München (DE)
(72) Inventor: Sui, Ai Fen, 100102, Beijing (CN); Guo, Dai Fei, 100102, Beijing (CN)

(57) **Abstract**

The present invention relates to a method for operating a packet data protocol context and an apparatus thereof, wherein the method comprises: when a general packet radio service support node receives a message for requesting an update or delete operation to be carried out to the packet data protocol context, it checks whether there is present in said general packet radio service support node a packet data protocol context in which a TEID and the content of at least one designated information unit included are identical respectively to the TEID and the content of the at least one designated information unit included in said message; and when the checked result is affirmative, said update or delete operation is carried out to said packet data protocol context present in said general packet radio service support node. Using the method and apparatus can prevent the PDP context included in a GSN of a GPRS network from being updated or deleted illegally.

## Description

### Technical field

The present invention relates to general packet radio service networks and, particularly, to a method for operating a packet data protocol context and apparatus therefor.

### Background art

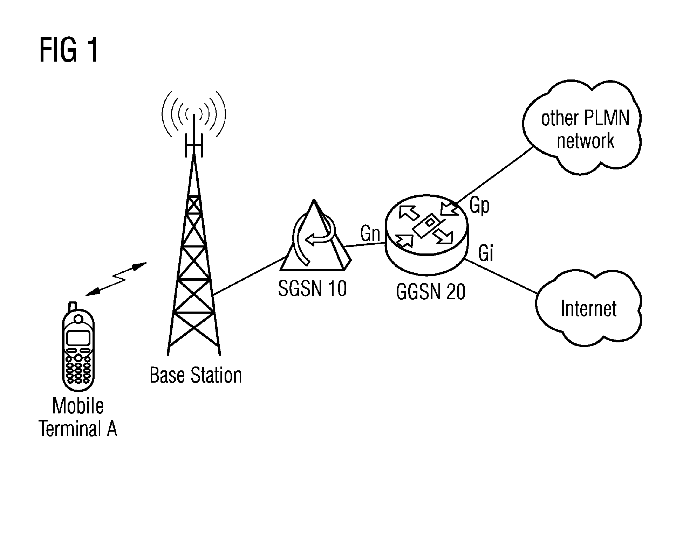

Fig. 1 is a simplified schematic diagram showing a currently available General Packet Radio Service (GPRS) network structure. As shown in Fig. 1, the GPRS network includes a Serving GPRS Support Node (SGSN) 10 and a Gateway GPRS Support Node (GGSN) 20, in which the SGSN 10 is used to provide a data support service to a mobile terminal, and the GGSN 20 is used to provide a data gateway service. The SGSN 10 and the GGSN 20 are collectively referred to as a General packet radio service Support Node (GSN). In a GPRS network, Gn, Gp and Gi are three important interfaces, in which the Gn interface is used for the SGSN 10/GGSN 20 to communicate with other entities in the same Public Land Mobile Network (PLMN), the Gp interface is used for the SGSN 10/GGSN 20 to communicate with SGSN/GGSN in other PLMNs, and the Gi interface is used for the GGSN 20 to communicate with other packet data networks, such as Internet and intranet, etc.

A GTP (GPRS Tunneling Protocol) is used between the GSNs to package a session from a mobile terminal or from an external packet data network, the session is packaged in the form of a PDP context in the GTP tunnel, and the GSN manages the PDP contexts via a GTP control plane message, such as to create, delete, and update the context.

Each PDP context is identified by a Tunnel Endpoint Identifier (TEID). In the case for example that a mobile terminal roams over regions or there is a change in data communication QoS, and so on, the PDP context created by the SGSN 10 and the GGSN 20 for the data communication is updated. When the mobile terminal's data communication is completed, the PDP context created by the SGSN 10 and the GGSN 20 for the data communication is deleted.

The GPRS network specifications provide an update PDP context request message (Update PDP Context Request) to request an update operation to be carried out to the PDP context and a delete PDP context request message (Delete PDP Context Request) to request a delete operation to be carried out to the PDP context. When the GGSN 20 receives an update PDP context request message, the GGSN 20 uses the information included in the update PDP context request message to update the PDP context in the GGSN 20 which includes the TEID identical to the TEID included in the update PDP context request message, without verifying the identity of the sender of the update PDP context request message. Similarly, when the SGSN 10 (or the GGSN 20) receives a delete PDP context request message, the SGSN 10 (or the GGSN 20) deletes the PDP context in the SGSN 10 (or the GGSN 20) which includes the TEID identical to the TEID included in the delete PDP context request message, without verifying the identity of the sender of the delete PDP context request message.

Currently, it has happened if that hackers initiate GTP attacks, for example, through a Gp interface to destroy a GPRS network. In order to prevent the initiation of GTP attacks by sending malicious GTP data packets from a Gp interface, a currently available solution is to set up a firewall (FW) at the Gp interface to filter out a malicious GTP data packet.

However, the firewall set up at a Gp interface cannot filter out a forged update PDP context request message and a forged delete PDP context request message sent to a GSN in a GPRS network from the Gp interface, therefor setting up a firewall at the Gp interface cannot prevent the hackers from illegally updating or deleting PDP contexts included in the SGSN and GGSN in the GPRS network, and the illegal updating or deleting of the PDP contexts included in the SGSN and the GGSN will cause an abnormality to appear in the data communication of the mobile terminal in the GPRS network.

The object of the present invention is to provide a method for operating a packet data protocol context and an apparatus thereof, and using the method and the apparatus to prevent the PDP context included in a GSN of a GPRS network from being updated or deleted illegally.

The object is solved by a method for operating a packet data protocol context according to the present invention comprising the steps of: checking, when a general packet radio service support node receives a message for requesting an update or delete operation to be carried out to the packet data protocol context, whether there is present in said general packet radio service support node a packet data protocol context in which a TEID and the content of at least one designated information unit included are identical respectively to the TEID and the content of the at least one designated information unit included in said message; and performing, when the result of the checking is affirmative, said update or delete operation to said packet data protocol context present in said general packet radio service support node.

The object is additionally solved by a machine-readable medium with program instructions stored thereon, for causing a machine to carry out the above mentioned method steps.

The object is furthermore solved by an apparatus for operating a packet data protocol context according to the present invention, the apparatus comprising: a checking module for checking, when a general packet radio service support node receives a message for requesting an update or delete operation to be carried out to the packet data protocol context, whether there is present in said general packet radio service support node (GSN) a packet data protocol context in which a TEID and the content of at least one designated information unit included are identical respectively to a TEID and the content of the at least one designated information unit included in said message; and a performing module for performing, when the result of the checking is affirmative, said update or delete operation to said packet data protocol context present in said general packet radio service support node.

The object is also solved by a general packet radio service support node according to the present invention, the general packet radio service support node comprising: a receiving module for receiving a message requesting an update or delete operation to be carried out to a packet data protocol context; a checking module for checking whether there is present in said general packet radio service support node a packet data protocol context in which a TEID and the content of at least one designated information unit included are identical respectively to the TEID and the content of the at least one designated information unit included in said message; and a performing module for performing, when the result of the checking is affirmative, said update or delete operation to said packet data protocol context present in said general packet radio service support node.

### Brief description of the drawings

The features, characteristics and advantages of the present invention will become more apparent in the detailed description below in conjunction with the accompanying drawings, in which:
Fig. 1 is a simplified schematic diagram showing a currently available GPRS network structure;
Fig. 2 is a schematic flow chart showing a method for operating a PDP context according to a first embodiment of the present invention; and
Fig. 3 is a schematic flow chart showing a method for operating a PDP context according to a second embodiment of the present invention.

### Description of preferred embodiments

Before various embodiments of the present invention are described in detail, a brief description is first given of how a hacker can send a forged update PDP context request message or a forged delete PDP context request message from the interface of a GPRS network to update or delete a PDP context included in the GSN (SGSN and GGSN) of the GPRS network.

It can be seen from the above description of the prior art that when a GSN of the GPRS network receives an update PDP context request message or a delete PDP context request message, it does not verify the identity of the sender of the update PDP context request message or the delete PDP context request message, it searches directly the PDP context which includes the TEID identical to the TEID included in the update PDP context request message or the delete PDP context request message, and updates and deletes the PDP context retrieved.

Since the GPRS network specifications are open to the public, the hackers can obtain easily the message formats of the update PDP context request message and the delete PDP context request message, so as to understand various information units, including TEID, in the update PDP context request message and the delete PDP context request message. Furthermore, the value range for the TEID is determined. Therefor, the hackers can go through all the possible values of the TEID, and forge multiple update PDP context request messages or delete PDP context request messages (different values are taken by the TEIDs included in various update PDP context request messages or delete PDP context request messages). If some interfaces of the GPRS network such as the Gp interface lack effective protection, a hacker can send the forged update PDP context request messages or delete PDP context request messages to the GSN via the interface. When the GSN receives these forged update PDP context request messages or delete PDP context request messages, if the PDP context included in the GSN contains the PDP context which includes the TEID identical to the TEID included in these forged update PDP context request messages or these delete PDP context request messages, the PDP context present there will be updated or deleted illegally.

Considering that one reason for the PDP context included in the GSN to be updated or deleted illegally is that when the GSN receives the update PDP context request message or the delete PDP context request message, it searches the PDP context which needs to be updated or deleted only on the basis of the TEID included in the update PDP context request message or the delete PDP context request message, in the embodiments of the present invention, when the PDP contexts which need to be updated or deleted are searched, in addition to on the basis of the information unit of the TEID included in the update PDP context request message or the delete PDP context request message, it is also on the basis of other information units included in the update PDP context request message or the delete PDP context request message.

Various embodiments of the present invention are described in detail hereinbelow in conjunction with the accompanying drawings.

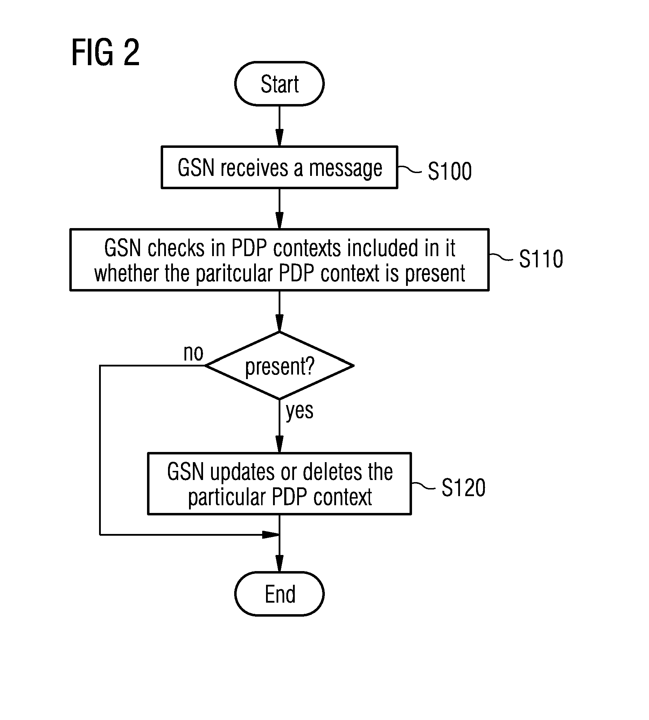

Fig. 2 is a schematic flow chart showing a method for operating a PDP context according to the first embodiment of the present invention. As shown in Fig. 2, the GSN (SGSN or GGSN) of the GPRS network receives a message requesting an update or delete operation to be carried out to a PDP context, i.e., an update PDP context request message or a delete PDP context request message (step S100).

Then, the GSN of the GPRS network checks whether there is present a particular PDP context in the PDP contexts included in it, in which the TEID and the content of at least one designated information unit included in the particular PDP context are identical respectively to the TEID and the content of the at least one designated information unit included in the received message for requesting an update or delete operation to be carried out to the PDP context (step S110).

If the result of the checking at step S110 is affirmative, i.e., there is present in the PDP context included in the GSN of the GPRS network the particular PDP context, the GSN of the GPRS network updates or deletes the particular PDP context (step S120). In this case, when the received message is an update PDP context request message, the GSN of the GPRS network updates the particular PDP context based on the received update PDP context request message; and when the received message is a delete PDP context request message, the GSN of the GPRS network deletes the particular PDP context.

If the result of the checking at step S110 is negative, i.e., there is not present the particular PDP context in the PDP context included in the GSN of the GPRS network, the GSN of the GPRS network does not carry out any operation to the PDP context included in it, and the flow procedure ends.

According to the GPRS network specifications, various information units included in the update PDP context request message and the delete PDP context request message can be divided into three categories: an information unit included mandatorily in an update PDP context request message and a delete PDP context request message, an information unit included conditionally in an update PDP context request message and a delete PDP context request message, and an information unit included optionally in an update PDP context request message and a delete PDP context request message. In this embodiment, the at least one designated information unit can be an information unit to be included mandatorily and/or conditionally in the update PDP context request message and the delete PDP context request message.

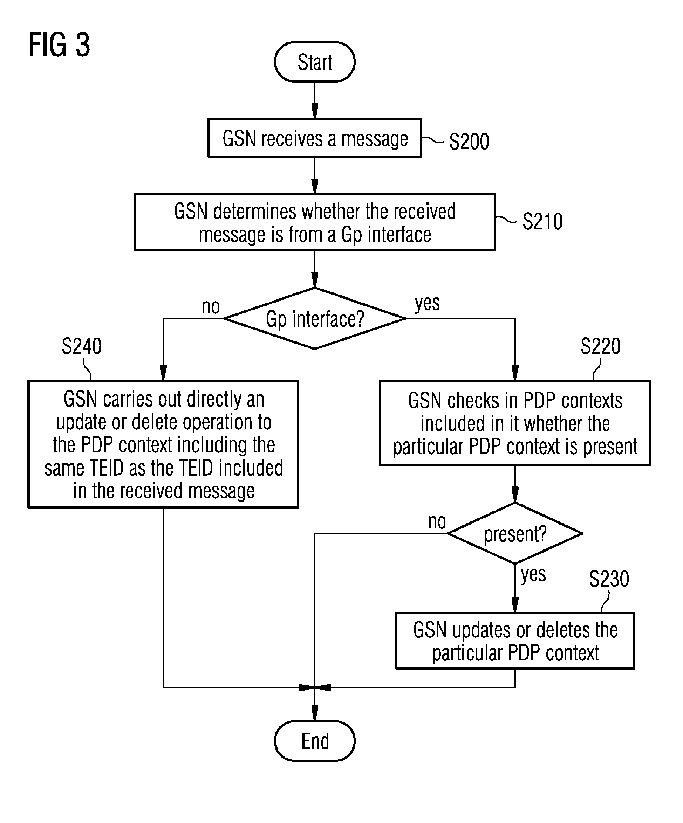

Fig. 3 is a schematic flow chart showing a method for operating a PDP context according to the second embodiment of the present invention. Compared with the above first embodiment, in the second embodiment, only for the update PDP context request message and the delete PDP context request message from the interface which may be attacked, the GSN searches the PDP context needed to be updated or deleted on the basis of the TEID and the content of at least one designated information unit included in the update PDP context request message and the delete PDP context request message and updates or deletes the searched PDP context; and as to the update PDP context request message and the delete PDP context request message from other interfaces, the GSN continues in the original manner to update or delete directly the PDP context in the GSN which includes the TEID identical to the TEID included in the received update PDP context request message and the received delete PDP context request message, such that the GSN processing load or the renewal overhead of the GSN equipment can be reduced. As an example, a Gp interface is taken as the interface which is possible to be attacked, and the technical solution of the present embodiment is described below.

As shown in Fig. 3, the GSN (SGSN or GGSN) of the GPRS network receives a message requesting an update or delete operation to be carried out to the PDP context, i.e., an update PDP context request message or a delete PDP context request message (step S200).

Then, the GSN of the GPRS network determines whether the received message is from the Gp interface (step S210).

If the result of the determining at step S210 is affirmative, i.e., the received message is from the Gp interface, the GSN of the GPRS network checks whether there is present in the included PDP context a particular PDP context, in which the TEID and the content of at least one designated information unit included in the particular PDP context are identical respectively to the TEID and the content of the at least one designated information unit included in the received message requesting an update or delete operation to be carried out to the PDP context (step S220).

If the result of the checking at step S220 is affirmative, i.e., there is present in the PDP context included in the GSN of the GPRS network the particular PDP context, the GSN of the GPRS network updates or deletes the particular PDP context in a conventional manner (step S230) In this case, when the received message is an update PDP context request message, the GSN of the GPRS network updates the particular PDP context based on the received update PDP context request message; when the received message is a delete PDP context request message, the GSN of the GPRS network deletes the particular PDP context.

If the result of the checking at step S220 is negative, i.e., there is not present in the PDP context included in the GSN of the GPRS network the particular PDP context, the GSN of the GPRS network does not carry out any operation, and the flow procedure ends.

If the result of the determining at step S210 is negative, i.e., the received message is not from the Gp interface, the GSN of the GPRS network carries out directly an update operation or a delete operation to the PDP context in the GSN which includes the TEID identical to the TEID included in the received message (step S240).

Those skilled in the art should understand that various steps disclosed in the various embodiments of the present invention can be realized by way of software, hardware or a combination of software and hardware.

Those skilled in the art should understand that various variations and modifications can be made to the various embodiments of the present invention without departing from the essence of the present invention, and all the variations and modifications should fall within the protective scope of the present invention. Therefor, the protective scope of the present invention is defined by the appended claims.

The present invention relates to a method for operating a packet data protocol context and an apparatus thereof, wherein the method comprises: when a general packet radio service support node receives a message for requesting an update or delete operation to be carried out to the packet data protocol context, it checks whether there is present in said general packet radio service support node a packet data protocol context in which a TEID and the content of at least one designated information unit included are identical respectively to the TEID and the content of the at least one designated information unit included in said message; and when the checked result is affirmative, said update or delete operation is carried out to said packet data protocol context present in said general packet radio service support node. Using the method and apparatus can prevent the PDP context included in a GSN of a GPRS network from being updated or deleted illegally.

## Claims

1. A method for operating a packet data protocol context, comprising the steps of:
checking, when a general packet radio service support node receives a message for requesting an update or delete operation to be carried out to the packet data protocol context, whether there is present in said general packet radio service support node a packet data protocol context in which a TEID and the content of at least one designated information unit included are identical respectively to a TEID and the content of the at least one designated information unit included in said message; and
performing, when the result of the checking is affirmative, said update or delete operation to said packet data protocol context present in said general packet radio service support node.

2. The method as claimed in claim 1, wherein it further comprises the steps of:
determining, when said general packet radio service support node receives said message, whether said message is from an interface which may be attacked; and
checking, when the result of the determining is affirmative, whether there is present in said general packet radio service support node a packet data protocol context in which a TEID and the content of at least one designated information unit included are identical respectively to the TEID and the content of said at least one designated information unit included in said message.

3. The method as claimed in claim 2, wherein it further comprises the step of: when said result of the determining is negative, carrying out directly an update or delete operation to the packet data protocol context in said general packet radio service support node which includes the TEID identical to the TEID included in said message.

4. The method as claimed in claim 1 or 2, wherein it further comprises the step of:
when said result of the checking is negative, not performing said update or delete operation to said packet data protocol context present in said general packet radio service support node.

5. The method as claimed in claim 1, wherein said at least one designated information unit is included mandatorily or conditionally in the information unit in said received message.

6. An apparatus for operating a packet data protocol context, comprising:
a checking module for checking, when a general packet radio service support node receives a message for requesting an update or delete operation to be carried out to the packet data protocol context, whether there is present in said general packet radio service support node (GSN) a packet data protocol context in which a TEID and the content of at least one designated information unit included are identical respectively to a TEID and the content of the at least one designated information unit included in said message; and
a performing module for performing, when the result of the checking is affirmative, said update or delete operation to said packet data protocol context present in said general packet radio service support node.

7. The apparatus as claimed in claim 6, wherein it further comprises a determining module for determining, when said general packet radio service support node receives said message, whether said message is from an interface which may be attacked, and
said checking module is further used for checking, when the result of the determining is affirmative, whether there is present in said general packet radio service support node a packet data protocol context in which the TEID and the content of at least one designated information unit included are identical respectively to the TEID and the content of the at least one designated information unit included in said message.

8. The apparatus as claimed in claim 7, wherein
said checking module is further used, when said result of the determining is negative, to directly carry out an update or delete operation to the packet data protocol context in said general packet radio service support node in which the TEID included is identical to the TEID included in said message.

9. The apparatus as claimed in claim 6 or 7, wherein
said performing module is further used, when the result of the checking is negative, not to perform said update or delete operation to said packet data protocol context present in said general packet radio service support node.

10. The apparatus as claimed in claim 6, wherein said at least one designated information unit is included mandatorily or conditionally in the information unit in said received message.

11. A general packet radio service support node, comprising:
a receiving module for receiving a message requesting an update or delete operation to be carried out to a packet data protocol context;
a checking module for checking whether there is present in said general packet radio service support node a packet data protocol context in which a TEID and the content of at least one designated information unit included are identical respectively to the TEID and the content of the at least one designated information unit included in said message; and
a performing module for performing, when the result of the checking is affirmative, said update or delete operation to said packet data protocol context present in said general packet radio service support node.

12. The general packet radio service support node as claimed in claim 10, wherein it further comprises a determining module for determining whether said message is from an interface which may be attacked, and
said checking module is further used for checking, when the result of the determining is affirmative, whether there is present in said general packet radio service support node a packet data protocol context in which a TEID and the content of at least one designated information unit included are identical respectively to the TEID and the content of said at least one designated information unit included in said message.

13. The general packet radio service support node as claimed in claim 12, wherein
said checking module is further used, when said result of the determining is negative, for directly carrying out the update or delete operation to the packet data protocol context in said general packet radio service support node in which the TEID included is identical to the TEID included in said message.

14. The general packet radio service support node as claimed in claim 11 or 12, wherein
said performing module is further used, when said result of the checking is negative, not to perform said update or delete operation to said packet data protocol context present in said general packet radio service support node.

15. The general packet radio service support node as claimed in claim 12, wherein said at least one designated information unit is included mandatorily or conditionally in the information unit in said received message.

16. A machine-readable medium with program instructions stored thereon, for causing a machine to carry out the steps recorded in any of claims 1-5, when said program instructions are executed.
